# FASCICULE DE BREVET EUROPEEN

(11) **EP 2 541 712 B1**
(45) Date de publication et mention de la délivrance du brevet: **12.02.2020**
(21) Numéro de dépôt: 12172422.3
(22) Date de dépôt: 18.06.2012
(51) Int. Cl.: H02G 9/02, H02G 15/105, H02G 15/188, H01B 9/02

(54) **Ligne électrique munie de jonctions à arrêts d'écrans**
Stromleitung mit Kabelverbindungen mit Schirmauskreuzung
Electrical line with cross-bonding cable junctions

(30) Priorité: 01.07.2011 FR 1155946
(43) Date de publication de la demande: 02.01.2013
(73) Titulaire: Nexans, 92400 Courbevoie (FR)
(72) Inventeur: Dubois, David, 62730 Marck (FR); Gahungu, François, 59600 Vieux-Reng (FR); Ait Amar, Abdellatif, 62100 Calais (FR); Rollet, Benoît, 78600 Maisons-Lafitte (FR); Streit, Pascal, 1052 Le Mont-Sur-Lausanne (CH)
(74) Mandataire: Allain, Laurent

(56) Documents cités:
- EP-A1- 0 071 435
- EP-A1- 0 920 101
- EP-A1- 2 088 656
- JP-U- 49 018 087
- US-A- 3 363 049
- US-A- 3 857 071

## Description

L'invention se rapporte à une ligne électrique haute tension triphasée et enterrée, dotée de jonctions à arrêts d'écrans. De telles lignes sont constituées par trois câbles conducteurs de phase, dont chacun comprend une succession de portions de câble, reliées entre elles par des jonctions à arrêts d'écrans. En effet, chaque portion de câble comprend un conducteur central entouré sur toute sa longueur par un écran métallique, et les écrans de deux portions successives de câble sont disjoints au sein de ce type de jonction, pour permettre notamment de réduire les courants résiduels circulant dans lesdits écrans, dus au passage du courant électrique dans les câbles conducteurs de phase. L'invention se rapporte à une liaison électrique haute tension dotée de jonctions à arrêts d'écrans améliorées.

Pour la suite de la description, les expressions « jonction à arrêts d'écrans » et « jonction à rupture d'écrans » sont équivalentes.

Les jonctions à arrêts d'écrans existent et ont déjà fait l'objet de brevets. On peut par exemple citer le brevet US3363049, qui se rapporte à une jonction à arrêts d'écrans, impliquant un câble de liaison coaxial, dont le conducteur interne est connecté à un écran d'une portion de câble, et dont le conducteur externe est connecté à un écran de l'autre portion de câble. Ce brevet décrit un seul type de jonction à rupture d'écrans, mettant en oeuvre un câble de liaison coaxial. Les documents EP0920101, JP49018087U et EP2088656 divulguent aussi des jonctions à arrêts d'écrans.

Le document de brevet US3857071 décrit une ligne électrique à haute tension triphasée comportant l'ensemble des caractéristiques du préambule de la revendication 1. Les documents JP49018087U et EP0071435 divulguent aussi des lignes électriques à haute tension triphasées.

Les lignes électriques haute tension triphasées et enterrées, sont constituées par des câbles conducteurs de phase, formés chacun par une succession de portions de câbles, mises bout à bout par l'intermédiaire de jonctions à arrêts d'écrans. Ces jonctions à arrêts d'écrans peuvent être de différents types le long desdits câbles, en fonction des besoins rencontrés au niveau de l'évacuation des courants résiduels. Or, il peut s'avérer compliqué et coûteux d'avoir à développer et à usiner des jonctions de câbles à arrêts d'écrans, ayant leur propre spécificité structurelle, fonctionnelle et dimensionnelle. Les lignes électriques à haute tension selon l'invention, mettent en oeuvre différents types de jonctions à arrêts d'écrans, ayant la particularité de conserver une structure générale constante, et d'impliquer un module amovible spécifique, lié à une application particulière recherchée, ledit module étant conformé pour venir se connecter à ladite structure générale. Autrement dit, la structure générale de ces jonctions à arrêts d'écrans possède une interface de connexion standard, sur laquelle peut venir s'enficher le module souhaité, doté lui-même d'une interface de connexion complémentaire standard. Ainsi, chaque type de jonction se différencie des autres types de jonction, au niveau de ce module variable. Par conséquent, une ligne électrique selon l'invention peut être élaborée rapidement et facilement, en y installant de façon rapide et répétitive, la même structure générale de jonction à arrêts d'écrans, puis en y insérant les modules adaptés, en fonction des besoins rencontrés.

L'invention a pour objet une ligne électrique à haute tension triphasée et enterrée, comprenant l'ensemble des caractéristiques de la revendication 1. La principale caractéristique d'un ligne électrique selon l'invention, est que la structure principale de toutes les jonctions est identique et présente une interface de connexion standard reliée à un premier écran de la première portion et à un deuxième écran de la deuxième portion, un module variable doté d'une interface de connexion complémentaire et d'au moins un câble de liaison, est apte à venir s'enficher dans l'interface de connexion de la structure principale commune de chaque jonction. Autrement dit, toutes les jonctions à arrêts d'écrans de la ligne électrique selon l'invention, possèdent une structure principale standard et constante, dont la fonction essentielle est de relier mécaniquement et électriquement deux portions successives d'un câble conducteur de phase, et un module variable, dont la fonction est d'évacuer le courant électrique résiduel circulant dans les écrans desdites portions, cette évacuation s'effectuant via chaque câble de liaison dudit module. Il est important de souligner qu'un type de module se différencie d'un autre type de module, au niveau du nombre et/ou de la nature des câbles de liaison, qu'il implique. De cette manière, une ligne électrique selon l'invention, peut être montée rapidement, efficacement et avec une certaine souplesse. En effet, dans un premier temps, toutes les portions de câbles sont jointes entre elles, de façon systématique et en suivant le même protocole opérationnel, par la structure principale standard des jonctions à arrêts d'écrans. Dans un deuxième temps, en fonction des besoins et des connexions locales à réaliser, le module le plus adapté est connecté à chacune desdites structures principales desdites jonctions déjà installées. De façon usuelle, les écrans des câbles conducteurs de phase sont métalliques. La liaison entre l'interface de connexion standard de chaque structure principale, et les écrans des portions de câble concernés et situés à l'intérieur de ladite structure, est réalisée par tout moyen apte à conduire le courant résiduel circulant dans lesdits écrans pour l'évacuer vers l'extérieur, lesdits moyens pouvant par exemple être constitués par des câbles secondaires internes. L'interface de connexion de chacune des structures principales des jonctions, comprend ainsi deux points de contact correspondant à ces liaisons avec les deux écrans de la jonction. Il en résulte que l'interface de connexion complémentaire de chaque type de module, comprend également deux points de contact complémentaires aptes à venir se connecter aux deux points de contact de l'interface de connexion de ladite structure principale.

Avantageusement, les trois câbles possèdent le même nombre de jonctions, disposées sensiblement aux mêmes endroits le long de chacun desdits câbles, de sorte que les jonctions des trois câbles sont regroupées dans des zones disposées le long de la ligne, les jonctions d'une même zone étant toutes du même type. Autrement dit, une ligne électrique selon l'invention est jalonnée de plusieurs zones faiblement étendues, et contenant chacune trois jonctions à arrêts d'écrans du même type, chaque jonction d'une même zone appartenant à un câble conducteur différent. Une zone de faible étendue est une zone qui s'étale sur quelques mètres. Le regroupement de jonctions du même type par zone, va faciliter les interconnexions entre elles, afin d'optimiser les conditions d'évacuation des courants électriques résiduels circulant dans les écrans métalliques des portions de câble.

Selon un premier mode de réalisation préféré d'une ligne électrique selon l'invention, le module est doté d'un seul câble de liaison monopolaire, le premier et le deuxième écran étant relié électriquement audit câble de liaison, la structure principale et ledit module définissant un premier type de jonction. Autrement dit, l'évacuation des courants résiduels circulant dans les deux écrans situés au niveau d'une même jonction, s'effectue par l'intermédiaire d'un simple câble de liaison monopolaire implanté dans ce premier type de module. Cela signifie que le module est conformé en interne, de façon à créer un circuit conducteur de courant, permettant d'acheminer les courants résiduels en provenance desdits écrans vers cet unique câble de liaison monopolaire.

De façon préférentielle, les trois câbles de liaison monopolaires issus des trois jonctions d'une même zone, sont reliés à un coffret de mise à la terre directe. Le coffret ne fait pas partie intégrante de la ligne électrique mais est situé dans une zone regroupant les trois jonctions. Ce coffret comprend une boite de connexion reliée directement à la terre, et dans laquelle sont connectés les trois câbles de liaison monopolaires. De cette manière, les courants résiduels circulant dans les écrans des portions de câble sont directement évacués vers la terre.

Selon un deuxième mode de réalisation préféré d'une ligne électrique selon l'invention, le module est doté d'un câble de liaison coaxial, dont le conducteur interne est destiné à être relié au premier écran et dont le conducteur externe est destiné à être relié au deuxième écran, la structure principale et ledit module définissant un deuxième type de jonction. Pour cette configuration, l'évacuation des courants résiduels circulant dans les deux écrans situés au niveau d'une même jonction, s'effectue par l'intermédiaire d'un câble de liaison coaxial implanté dans ce deuxième type de module. Cela signifie que ce deuxième type de module est conformé en interne, de façon à créer un circuit conducteur de courant, permettant d'acheminer les deux courants résiduels en provenance desdits écrans vers ce câble de liaison coaxial.

De façon avantageuse, les trois câbles de liaison coaxiaux issus des trois jonctions d'une même zone, sont reliés à un coffret à trois voies coaxiales avec permutation. Ce coffret ne fait pas partie de la ligne électrique, et est situé en parallèle de celle-ci dans la zone concernée. Un tel coffret est doté d'une boite de connexion reliée à la terre, et sur laquelle viennent se connecter les trois câbles de liaison coaxiaux. Cette configuration, qui correspond à une permutation indirecte des écrans, par l'intermédiaire de cette boite de connexion logée dans le coffret, permet d'accéder plus facilement aux connexions d'écran dans le cas par exemple d'une recherche de défaut. De plus il est alors possible de loger dans ce coffret des para surtenseurs ou parafoudre dont la fonction est alors de limiter les surtensions éventuelles appliquées aux arrêts d'écran des jonctions.

Selon un troisième mode de réalisation préféré d'une ligne électrique selon l'invention, le module est doté de deux câbles de liaison monopolaires, l'un étant destiné à être relié au premier écran et l'autre étant destiné à être relié au deuxième écran, la structure principale et ledit module définissant un troisième type de jonction. Pour cette configuration, l'évacuation du courant résiduel de chaque écran concerné par une même jonction, s'effectue via un câble de liaison monopolaire prenant naissance dans ce troisième type de module.

Préférentiellement, un câble de liaison monopolaire d'une première jonction est relié à un écran d'une deuxième jonction, l'autre câble de liaison de la première jonction étant relié à un écran de la troisième jonction. Autrement dit, chacune des trois jonctions appartenant à une même zone, sont reliées aux deux autres jonctions sur le même schéma. Cette configuration correspondant à une permutation directe des écrans, permet de réaliser une permutation des écrans là où une protection par des parafoudres n'est pas nécessaire.

Avantageusement, les écrans des câbles conducteurs de phase, sont réalisés dans un métal choisi dans le groupe formé par l'aluminium, le plomb, l'acier et le cuivre. Ils peuvent aussi être réalisés au moyen d'une combinaison de plusieurs couches métalliques de nature différente.

Les lignes électriques selon l'invention, présentent l'avantage d'être élaborées facilement, rapidement et avec une certaine souplesse en raison de la nature des jonctions à interruption d'écran qui la composent. En effet, les structures principales de toutes les jonctions étant identiques, elles peuvent être montées le long des câbles conducteurs de phase, de façon systématique et répétée, au moyen de la même opération simple et rapide. Dans un deuxième temps, le module adapté est inséré dans chacune des structures principales déjà installées, le choix dudit module étant dicté par un besoin particulier et/ou par des contraintes locales. Elles ont de plus l'avantage de mettre en œuvre différents types de jonctions à arrêts d'écrans le long des câbles de phase la composant, permettant ainsi d'optimiser les conditions d'évacuation du courant électrique résiduel circulant dans les écrans métalliques des portions constituant lesdits câbles.

On donne ci-après une description détaillée d'un mode de réalisation préféré d'une ligne électrique à haute tension selon l'invention, en se référant aux figures 1 à 4c.
- La figure 1 est une vue schématisée d'une ligne électrique à haute tension triphasée et enterrée selon l'invention,
- La figure 2 est une vue de coté d'une jonction à arrêts d'écrans selon l'invention,
- La figure 3a est une vue schématisée d'un premier type de module d'une jonction à arrêts d'écrans selon l'invention,
- La figure 3b est une vue schématisée d'un deuxième type de module d'une jonction à arrêts d'écrans selon l'invention,
- La figure 3c est une vue schématisée d'un troisième type de module d'une jonction à arrêts d'écrans selon l'invention,
- La figure 4a est une vue schématisée d'une zone d'une ligne à haute tension selon l'invention, comprenant trois jonctions du premier type,
- La figure 4b est une vue schématisée d'une zone d'une ligne à haute tension selon l'invention, comprenant trois jonctions du deuxième type,
- La figure 4c est une vue schématisée d'une zone d'une ligne à haute tension selon l'invention, comprenant trois jonctions du troisième type,

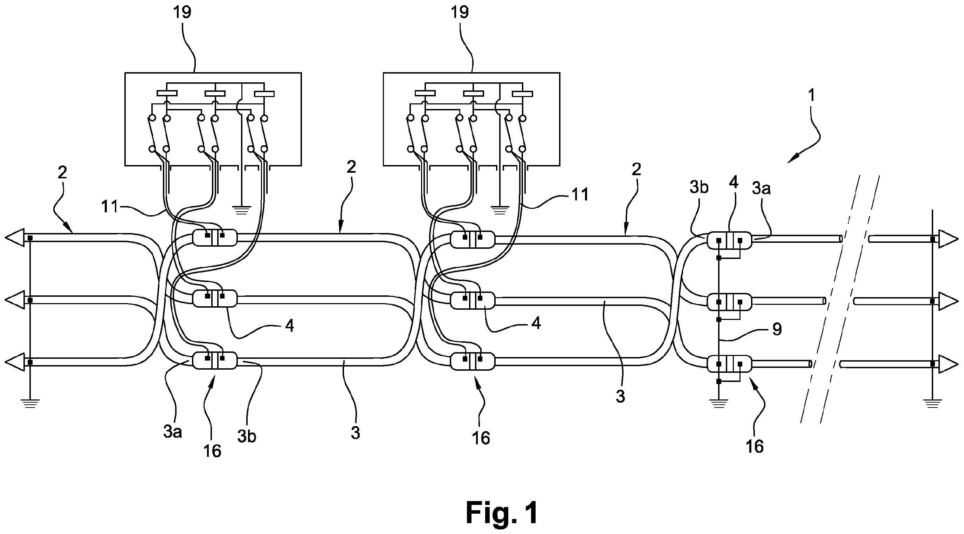

En se référant à la figure 1, une ligne électrique 1 à haute tension, triphasée et enterrée, comporte trois câbles 2 conducteurs de phase, dont chacun comprend une succession de portions 3 de câble mises bout à bout pour former lesdits câbles 2. Une portion 3 de câble 2 se compose d'un conducteur métallique central, entouré généralement par un matériau isolant et par un écran cylindrique métallique, réalisé préférentiellement en aluminium, en plomb, en acier ou en cuivre.

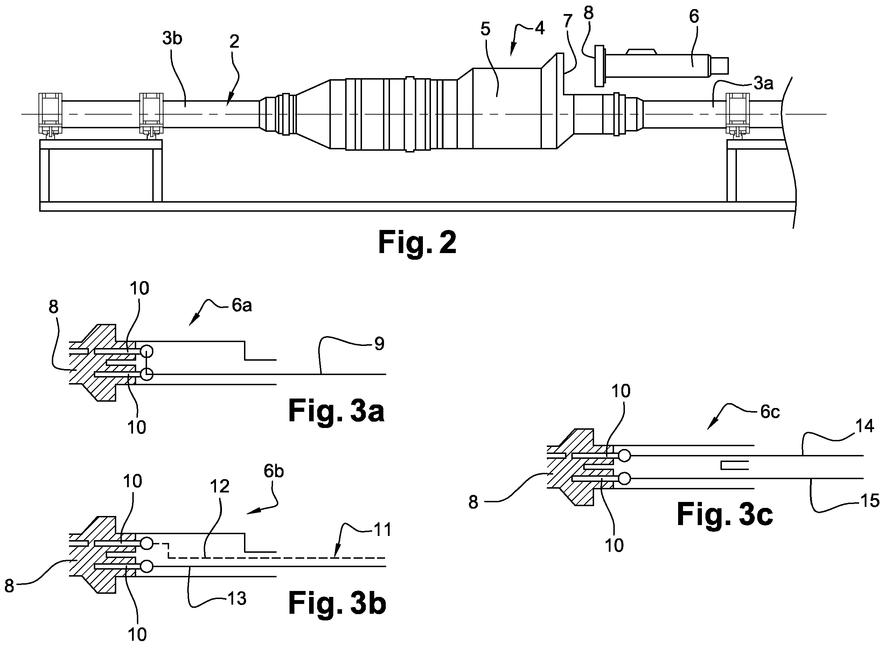

En se référant à la figure 2 et aux figures 3a, 3b et 3c, deux portions 3a, 3b successives de câble 2 sont reliées entre elles par une jonction 4 à arrêts d'écrans, constituée par une structure principale 5 standard et par un module amovible 6. Au niveau de ces jonctions 4, les parties conductrices des deux portions de câble successives 3a, 3b sont au contact et en continuité l'une de l'autre, tandis que leurs écrans métalliques sont disjoints pour notamment réduire les courants électriques résiduels circulant dans lesdits écrans, et dus au courant passant dans les câbles conducteurs 2. Les lignes à haute tension selon l'invention comportent différents types de jonctions 4 à arrêts d'écrans.

En se référant à la figure 2, la structure principale 5 de chaque jonction 4 est assimilable à un corps cylindrique profilé, réalisé en cuivre ou en aluminium, ladite structure 5 agissant comme une protection assurant la liaison mécanique et électrique de deux portions 3a, 3b de câble 2 successives. Cette structure principale 5 est constante et commune à toutes les jonctions 4 à arrêts d'écrans disposées le long de la ligne 1, sur les trois câbles 2. Cette structure principale 5 possède une interface de connexion 7 standard, reliée aux deux écrans métalliques disjoints appartenant à deux portions 3a,3b successives de câble 2, cette liaison avec lesdits écrans s'effectuant avec des moyens conducteurs de courant, tels que par exemple, des câbles secondaires internes. Cette interface de connexion 7 standard possède ainsi deux points de contact, correspondant aux deux liaisons avec lesdits écrans. Un module variable 6 et amovible, doté d'une interface de connexion 8 complémentaire avec celle de la structure principale 5, peut venir s'enficher au niveau de l'interface de connexion 7 standard de ladite structure 5, ledit module 6 comportant au moins un câble de liaison. Ce module amovible 6 est variable, mais, quelle que soit sa version, il conserve une interface de connexion standard 8 et complémentaire avec celle 7 de la structure principale 5. Cette interface de connexion complémentaires 8 comporte deux points de contact complémentaires, destinés à coopérer avec les deux points de contact de l'interface de connexion 7 de la structure principale, afin d'établir une connexion électrique entre les écrans et le câble de liaison dudit module 6. Ce module variable 6 muni de son ou de ses câble(s) de liaison va contribuer à évacuer le courant résiduel circulant dans les écrans métalliques des portions 3 de câble 2. Ce module variable se décline essentiellement en trois versions.

En se référant à la figure 3a, une première version de module 6a implique un seul câble de liaison 9 monopolaire. Ce module 6a comprend deux broches 10 internes, prolongeant les deux liaisons avec les deux écrans métalliques de la jonction 4, une fois que ledit module 6a a été implanté dans la structure principale 5 de la jonction 4. Le câble de liaison 9 monopolaire relie l'extrémité des deux broches 10 internes et émerge dudit module 6a.

En se référant à la figure 3b, une deuxième version de module 6b implique un câble de liaison 11 coaxial. Ce module 6b comprend deux broches 10 internes, prolongeant les deux liaisons avec les deux écrans métalliques de la jonction 4, une fois que ledit module 6b a été implanté dans la structure principale 5 de la jonction 4. Le conducteur interne 12 de ce câble coaxial 11 relie l'extrémité de l'une des deux broches 10 tandis que le conducteur externe 13 dudit câble coaxial 11 relie l'extrémité de l'autre broche 10. Le câble de liaison 11 coaxial relie l'extrémité des deux broches 10 et émerge dudit module 6b.

En se référant à la figure 3c, une troisième version de module 6c implique deux câbles de liaison 14,15 monopolaires. Ce module 6c comprend deux broches 10 internes, prolongeant les deux liaisons avec les deux écrans métalliques de la jonction 4, une fois que ledit module 6b a été implanté dans la structure principale 5 de la jonction 4. Un câble de liaison 14 monopolaire relie l'extrémité de l'une des deux broches 10, tandis que l'autre câble de liaison 15 relie l'extrémité de l'autre broche 10. Les deux câbles de liaison monopolaires 14,15 relient chacun l'une des deux broches 10 et émergent dudit module 6c.

En se référant à la figure 1, chaque câble 2 conducteur de phase possède le même nombre de jonctions 4 à arrêts d'écrans, lesdites jonctions 4 étant placées aux mêmes endroits, le long desdits câbles 2. De cette manière, une ligne électrique 1 selon l'invention, est jalonnée de plusieurs zones 16 faiblement étendues et contenant chacune trois jonctions 4 à arrêts d'écrans du même type, et provenant de chaque câble conducteur 2 de phase. Les trois jonctions 4 de chacune desdites zones 16 étant du même type, elles permettent ainsi d'élaborer différentes configurations pour favoriser l'évacuation du courant résiduel passant dans les écrans des portions 3 de câble 2.

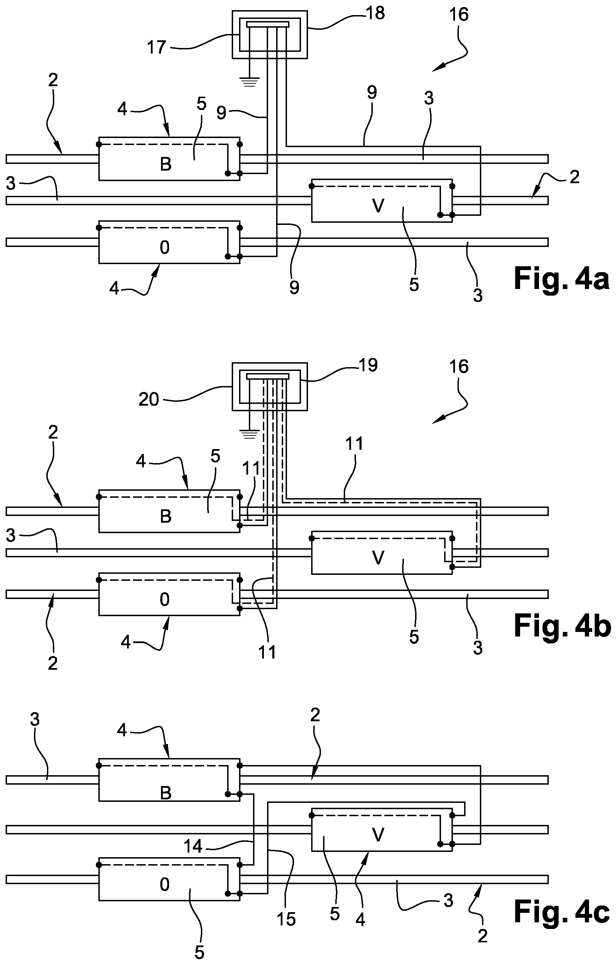

En se référant à la figure 4a, pour une zone 16 regroupant trois jonctions 4 dotées chacune d'un module 6a comportant un seul câble de liaison monopolaire 9, lesdits trois câbles de liaison monopolaires 9 sont connectés à une boite de connexion 17 reliée à la terre et logée dans un coffret 18 extérieur à la ligne électrique 1. La liaison de ces câbles monopolaires 9 avec cette boite de connexion 17 permet une mise à la terre directe des écrans des portions 3 de câble 2.

En se référant à la figure 4b, pour une zone 16 regroupant trois jonctions 4 dotées chacune d'un module 6b comportant un câble de liaison coaxial 11, lesdits trois câbles 11 de liaison coaxiaux sont connectés à une boite de connexion 19 reliée à la terre et logée dans un coffret 20 extérieur à la ligne électrique 1, ladite boite de connexion 19 possédant trois voies coaxiales avec permutation. Cette configuration permet de connecter des parafoudres de gaine afin de protéger les arrêts d'écrans des jonctions 4 et de réaliser les connexions de permutation desdits écrans.

En se référant à la figure 4c, pour une zone 16 regroupant trois jonctions 4 dotées chacune d'un module 6c comportant deux câbles de liaison monopolaires 14,15, un câble de liaison monopolaire 14 d'une première jonction 4 est relié à un écran d'une deuxième jonction 4, l'autre câble de liaison 15 de la première jonction 4 étant relié à un écran de la troisième jonction 4. Ce schéma de liaison entre les écrans se répète pour les trois jonctions 4 de cette même zone 16. Cette configuration correspondant à une permutation directe des écrans, permet de réduire les courants de circulation dans les écrans des câbles 2.

## Revendications

1. Ligne électrique (1) à haute tension triphasée et enterrée, comprenant trois câbles (2) conducteurs de phase, chacun desdits câbles conducteurs (2) étant constitué par une succession de portions (3,3a,3b) de câbles reliées entre elles par différents types de jonctions (4) à arrêts d'écrans, chaque jonction (4) comportant une structure principale (5) standard reliant une première portion (3a) à une deuxième portion (3b) de câble (2), **caractérisée en ce que** la structure principale (5) standard présente une interface de connexion (7) standard reliée électriquement à un premier écran de la première portion (3a) et à un deuxième écran de la deuxième portion (3b), et **en ce que** chaque jonction (4) comprend un module (6,6a,6b,6c) variable et amovible, comportant une première extrémité dotée d'une interface de connexion complémentaire (8) standard apte à venir s'enficher dans l'interface de connexion (7) standard de la structure principale (5) de chaque jonction (4), et comprenant une deuxième extrémité variable de laquelle émerge au moins un câble de liaison (9, 11, 14, 15), de manière à mettre en contact électrique ledit au moins un câble de liaison (9, 11, 14, 15) avec ledit premier écran et avec ledit second écran, deux modules différents se différenciant l'un de l'autre au niveau du nombre et de la nature dudit au moins un câble de liaison (9, 11, 14, 15) et deux jonctions (4) différentes se distinguant l'une de l'autre au niveau dudit module variable (6, 6a, 6b, 6c).

2. Ligne électrique selon la revendication 1, **caractérisée** en ce les trois câbles (2) possèdent le même nombre de jonctions (4), disposées sensiblement aux mêmes endroits le long de chacun desdits câbles (2), de sorte que les jonctions (4) des trois câbles (2) sont regroupées dans des zones (16) disposées le long de la ligne (1), et **en ce que** les jonctions (4) d'une même zone (16) sont toutes du même type.

3. Ligne électrique selon la revendication 2, **caractérisée en ce que** le module (6a) est doté d'un seul câble de liaison monopolaire (9), le premier et le deuxième écran étant relié électriquement audit câble de liaison (9), la structure principale (5) et ledit module (6a) définissant un premier type de jonction (4).

4. Ligne électrique selon la revendication 3, **caractérisée en ce que** les trois câbles (9) de liaison monopolaires issus des trois jonctions (4) d'une même zone (16), sont reliés à un coffret (18) de mise à la terre directe.

5. Ligne électrique selon la revendication 2, **caractérisé en ce que** le module (6b) est doté d'un câble de liaison coaxial (11), dont le conducteur interne (12) est destiné à être relié au premier écran et dont le conducteur externe (13) est destiné à être relié au deuxième écran, la structure principale (5) et ledit module (6b) définissant un deuxième type de jonction (4).

6. Ligne électrique selon la revendication 5, **caractérisée en ce que** les trois câbles de liaison coaxiaux (11) issus des trois jonctions (4) d'une même zone (16), sont reliés à un coffret (20) à trois voies coaxiales avec permutation.

7. Ligne électrique selon la revendication 2, **caractérisée en ce que** le module (6c) est doté de deux câbles de liaison monopolaires (14,15), l'un (14) étant relié au premier écran et l'autre (15) étant relié au deuxième écran, la structure principale (5) et ledit module (6c) définissant un troisième type de jonction (4).

8. Ligne électrique selon la revendication 7, **caractérisée en ce qu'**un câble de liaison monopolaire (14) d'une première jonction (4) est relié à un écran d'une deuxième jonction (4), et **en ce que** l'autre câble de liaison (15) de la première jonction (4) est relié à un écran d'une troisième jonction (4).

9. Ligne électrique selon l'une quelconque des revendications 1 à 8, **caractérisée en ce que** les écrans sont réalisés dans un métal choisi dans le groupe formé par l'aluminium, le plomb, l'acier et le cuivre.

## Patentansprüche

1. Hochspannungs-Stromleitung (1), dreiphasig und erdverlegt, umfassend drei Phasenleiterkabel (2), wobei jedes der Leiterkabel (2) aus einer Abfolge von Kabelabschnitten (3, 3a, 3b) besteht, die durch verschiedene Typen von Verbindungen (4) mit Schirmauskreuzungen miteinander verbunden sind, wobei jede Verbindung (4) eine Standard-Hauptstruktur (5) aufweist, die einen ersten Abschnitt (3a) mit einem zweiten Abschnitt (3b) eines Kabels (2) verbindet, **dadurch gekennzeichnet, dass** die Standard-Hauptstruktur (5) eine Standard-Verbindungsschnittstelle (7) aufweist, die mit einem ersten Schirm des ersten Abschnitts (3a) und mit einem zweiten Schirm des zweiten Abschnitts (3b) elektrisch verbunden ist, und dass jede Verbindung (4) ein variables und lösbares Modul (6, 6a, 6b, 6c) umfasst, aufweisend ein erstes Ende, das mit einer komplementären Standard-Verbindungsschnittstelle (8) ausgerüstet ist, die imstande ist, in die Standard-Verbindungsschnittstelle (7) der Hauptstruktur (5) jeder Verbindung (4) eingesteckt zu werden, und umfassend ein variables zweites Ende, von dem mindestens ein Verbindungskabel (9, 11, 14, 15) ausgeht, so dass das mindestens eine Verbindungskabel (9, 11, 14, 15) mit dem ersten Schirm und mit dem zweiten Schirm in elektrischen Kontakt versetzbar ist, wobei sich zwei unterschiedliche Module voneinander im Bereich der Anzahl und der Art des mindestens einen Verbindungskabels (9, 11, 14, 15) unterscheiden und sich zwei unterschiedliche Verbindungen (4) voneinander im Bereich des variablen Moduls (6, 6a, 6b, 6c) unterscheiden.

2. Stromleitung nach Anspruch 1, **dadurch gekennzeichnet, dass** die drei Kabel (2) dieselbe Anzahl an Verbindungen (4) besitzen, die etwa an denselben Stellen entlang von jedem der Kabel (2) derart angeordnet sind, dass die Verbindungen (4) der drei Kabel (2) in Zonen (16) gruppiert sind, die entlang der Leitung (1) angeordnet sind, und dass die Verbindungen (4) derselben Zone (16) alle desselben Typs sind.

3. Stromleitung nach Anspruch 2, **dadurch gekennzeichnet, dass** das Modul (6a) mit einem einzigen monopolaren Verbindungskabel (9) ausgerüstet ist, wobei der erste und der zweite Schirm mit den Verbindungskabel (9) elektrisch verbunden sind, wobei die Hauptstruktur (5) und das Modul (6a) einen ersten Typ einer Verbindung (4) definieren.

4. Stromleitung nach Anspruch 3, **dadurch gekennzeichnet, dass** die drei monopolaren Verbindungskabel (9), die aus den drei Verbindungen (4) derselben Zone (16) hervorgehen, mit einem Kasten (18) für direkte Erdung verbunden sind.

5. Stromleitung nach Anspruch 2, **dadurch gekennzeichnet, dass** das Modul (6b) mit einem koaxialen Verbindungskabel (11) ausgerüstet ist, dessen interner Leiter (12) bestimmt ist, mit dem ersten Schirm verbunden zu sein und dessen externer Leiter (13) bestimmt ist, mit dem zweiten Schirm verbunden zu sein, wobei die Hauptstruktur (5) und das Modul (6b) einen zweiten Typ einer Verbindung (4) definieren.

6. Stromleitung nach Anspruch 5, **dadurch gekennzeichnet, dass** die drei koaxialen Verbindungskabel (11), die aus den drei Verbindungen (4) derselben Zone (16) hervorgehen, mit einem Kasten (20) mit drei koaxialen Wegen mit Umschaltung verbunden sind.

7. Stromleitung nach Anspruch 2, **dadurch gekennzeichnet, dass** das Modul (6c) mit zwei monopolaren Verbindungskabeln (14, 15) ausgerüstet ist, wobei eins (14) mit dem ersten Schirm verbunden ist und das andere (15) mit dem zweiten Schirm verbunden ist, wobei die Hauptstruktur (5) und das Modul (6c) einen dritten Typ einer Verbindung (4) definieren.

8. Stromleitung nach Anspruch 7, **dadurch gekennzeichnet, dass** ein monopolares Verbindungskabel (14) einer ersten Verbindung (4) mit einem Schirm einer zweiten Verbindung (4) verbunden ist und dass das andere Verbindungskabel (15) der ersten Verbindung (4) mit einem Schirm einer dritten Verbindung (4) verbunden ist.

9. Stromleitung nach einem der Ansprüche 1 bis 8, **dadurch gekennzeichnet, dass** die Schirme aus einem Metall hergestellt sind, das aus der Gruppe ausgewählt ist, die von dem Aluminium, dem Blei, dem Stahl und dem Kupfer gebildet ist.

## Claims

1. A three-phase buried high-voltage electrical line (1), comprising three-phase conductor cables (2), each of said conductor cables (2) being made up of a series of cable portions (3, 3a, 3b) coupled to one another by different types of screen-break junctions (4), each junction (4) including a standard main structure (5) coupling a first portion (3a) to a second cable (2) portion (3b), **characterized in that** the standard main structure (5) has a standard connection interface (7) electrically coupled to a first screen break of the first portion (3a) and a second screen break of the second portion (3b), and **in that** each junction (4) comprises a variable and removable module (6, 6a, 6b, 6c), including a first end provided with a standard complementary connection interface (8) able to plug into the standard connection interface (7) of the main structure (5) of each junction (4), and comprising a second variable end from which at least one connecting cable (9, 11, 14, 15) emerges, so as to place said at least one connecting cable (9, 11, 14, 15) in contact with said first screen-break and with said second screen, two different modules being differentiated from one another in terms of the number and nature of said at least one connecting cable (9, 11, 14, 15) and two different junctions (4) being distinguished from one another in terms of said variable module (6, 6a, 6b, 6c).

2. The electrical line according to claim 1, **characterized in that** the three cables (2) have the same number of junctions (4), arranged substantially in the same locations along each of said cables (2), such that the junctions (4) of the three cables (2) are grouped together in zones (16) arranged along the line (1), and **in that** the junctions (4) of a same zone (16) are all of the same type.

3. The electrical line according to claim 2, **characterized in that** the module (6a) is equipped with only one single-pole connecting cable (9), the first and the second screen-break being electrically coupled to said connecting cable (9), the main structure (5) and said module (6a) defining a first junction type (4).

4. The electrical line according to claim 3, **characterized in that** the three single-pole connecting cables (9) coming from the three junctions (4) of a same zone (16) are coupled to a direct grounding box (18).

5. The electrical line according to claim 2, **characterized in that** the module (6b) is provided with a coaxial connecting cable (11), the inner conductor (12) of which is suitable for being coupled to the first screen-break and the outer conductor (13) of which is suitable for being coupled to the second screen-break, the main structure (5) and said module (6b) defining a second junction type (4).

6. The electrical line according to claim 5, **characterized in that** the three coaxial connecting cables (11) coming from the three junctions (4) of a same zone (16) are coupled to a box (20) with three coaxial paths with switching.

7. The electrical line according to claim 2, **characterized in that** the module (6c) is provided with two single-pole connecting cables (14, 15), one (14) being coupled to the first screen-break and the other (15) being coupled to the second screen-break, the main structure (5) and said module (6c) defining a third junction type (4).

8. The electrical line according to claim 7, **characterized in that** a single-pole connecting cable (14) of a first junction (4) is coupled to a screen-break of a second junction (4), and **in that** the other connecting cable (15) of the first junction (4) is coupled to a screen-break of a third junction (4).

9. The electrical line according to any one of claims 1 to 8, **characterized in that** the screens are made from a metal chosen from the group formed by aluminum, lead, steel and copper.
